# EUROPEAN PATENT APPLICATION

(11) **EP 1 300 441 A1**
(43) Date of publication of application: **09.04.2003**
(21) Application number: 01947904.7
(22) Date of filing: 06.07.2001
(51) Int. Cl.: C08L 23/16, C08L 83/04, C08K 5/5419, C08K 3/36

(54) **RUBBER COMPOSITION AND USE THEREOF**

(30) Priority: 11.07.2000 JP 2000210218
(71) Applicant: Mitsui Chemicals, Inc., Tokyo 100-6070 (JP); THE YOKOHAMA RUBBER CO., LTD., Tokyo 105-8685 (JP)
(72) Inventor: MATSUNAGA, Shin-ya, Mitsui Chemicals, Inc., Ichihara-shi, Chiba 299-0108 (JP); NAKAHAMA, Hidenari, Mitsui Chemicals, Inc., Ichihara-shi, Chiba 299-0108 (JP); KAWASAKI, Masaaki, Mitsui Chemicals, Inc., Ichihara-shi, Chiba 299-0108 (JP); ISHIKAWA, Kazunori, The Yokohama Rubber Co., Ltd., Hiratsuka-shi, Kanagawa 254-8601 (JP)
(74) Representative: HOFFMANN - EITLE
(86) International application number: JP0105911
(87) International publication number: WO02004558

(57) **Abstract**

This invention relates to a rubber composition comprising an ethylene-α-olefin having 3 to 12 carbon atoms-non-conjugated polyene copolymer rubber, a specific alkoxysilane compound, a specific polysiloxane and a specific fine-powdered silicic acid and/or silicate, to vulcanizing method of the rubber composition, and to a rubber product obtainable by the vulcanizing method.

## Description

### Technical Field

The present invention relates to a rubber composition containing an ethylene-α-olefin having 3 to 12 carbon atoms-non-conjugated polyene copolymer rubber, which is excellent in dynamic characteristics, namely its having a low tan δ, as well as excellent in heat resistance and fatigue resistance and which is suitably used for automobile tires and rubber vibration insulator materials.

### Background Art

The diene type rubber, such as natural rubber (NR), styrene-butadiene rubber (SBR) and butadiene rubber (BR), is known as a rubber excellent in dynamic fatigue resistance and dynamic characteristics, and it is used as a raw material rubber for automobile tires and rubber vibration insulators. These days, however, the environment wherein these rubber products are used has changed greatly, and improvement is requested for the heat resistance and weather resistance of the rubber products.

Regarding automobile tires, treads and tire side walls particularly demand weather resistance. However, there has been hitherto no such rubber that retains superior fatigue resistance and dynamic characteristics the conventional diene type rubber provides and in addition that possesses good weather resistance.

There have heretofore been made various studies on blend type rubber compositions comprising a diene type rubber which has excellent dynamic fatigue resistance and dynamic characteristics and an ethylene-α-olefin having 3 to 12 carbon atoms-non-conjugated polyene copolymer rubber, such as ethylene-propylene-non-conjugated diene copolymer rubber (EPDM), which has superior heat resistance and weather resistance. However, the levels of dynamic characteristics the ethylene-α-olefin having 3 to 12 carbon atoms-non-conjugated polyene copolymer rubber possesses and the levels of those the diene type rubber possesses are different, so that blend type rubber compositions to exhibit uniform physical properties have not been obtained up to now. The dynamic characteristics in automobile tires are related to whether the material used does not worsen fuel consumption, and an index thereof is tan δ (loss tangent), and the lower the tan δ the better the dynamic characteristics.

Meanwhile, regarding rubber vibration insulator products for automobiles, as the temperature inside engine rooms becomes more elevated, it has become difficult for such rubber vibration insulator products based on natural rubber, i.e. conventional diene type rubber, to provide practically endurable fatigue resistance.

Accordingly, emergence of a novel rubber material is desired which has excellent heat resistance and in addition which has dynamic characteristics and fatigue resistance equal or superior to the diene type rubber.

Generally, for improvement of the fatigue resistance, a material needs to have a mechanism for relaxing forces. For this to take place, the material needs to exhibit the crosslinking in the state of polysulfur rather than monosulfur and further needs to have a moderate crosslinking density.

On the other hand, improving dynamic characteristics necessitates a higher crosslinking density.

In the prior art, when it is tried to equalize the dynamic characteristics of an ethylene-α-olefin having 3 to 12 carbon atoms-non-conjugated polyene copolymer rubber to those of a diene type rubber such as NR, the crosslinking density becomes too high, with the result that mechanical properties, such as tensile elongation at break, deteriorate; thus it has been impossible to make the dynamic characteristics and physical properties compatible.

### Disclosure of the Invention

The present invention is directed for solving the problem as above-mentioned of the prior art. The object is to provide a rubber composition which has fatigue resistance, mechanical properties and dynamic characteristics equivalent to those of the diene type rubber such as natural rubber and which, in addition, has superior heat resistance and weather resistance.

The inventors studied earnestly to solve the problem above and found that, by using an ethylene-α-olefin having 3 to 12 carbon atoms-non-conjugated polyene copolymer rubber having good heat resistance, a specific alkoxysilane compound, a specific polysiloxane, further a specific fine-powdered silicic acid and/or silicate, and by strengthening the interaction between the fine-powdered silicic acid and/or silicate and the polymer, i.e., the ethylene-α-olefin having 3 to 12 carbon atoms-non-conjugated polyene copolymer rubber, by way of the alkoxysilane compound and polysiloxane, it was possible to improve the dynamic characteristics and mechanical properties together which were related antinomically. Thus, the present invention was accomplished.

That is, the present invention includes the following inventions.
(1) A rubber composition, comprising an ethylene-α-olefin having 3 to 12 carbon atoms-non-conjugated polyene copolymer rubber;
   at least one kind of alkoxysilane compound shown by the formula [1]: 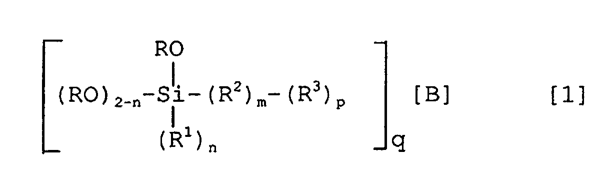 wherein R is an alkyl group having 1 to 4 carbon atoms, R¹ is an alkyl group having 1 to 4 carbon atoms or phenyl group, n is 0, 1 or 2, R² is a divalent linear or branched hydrocarbon group having 1 to 6 carbon atoms, R³ is an arylene group having 6 to 12 carbon atoms, m and p are each 0 or 1 provided that m and p are not 0 at the same time, q is 1 or 2, B is -SCN or -SH if q is 1 and -Sx- if q is 2 (wherein x is an integer of 2 to 8), or the formula [2]: 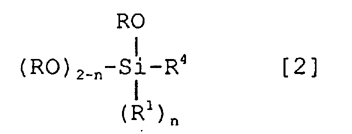 wherein R is an alkyl group having 1 to 4 carbon atoms, R¹ is an alkyl group having 1 to 4 carbon atoms or phenyl group, n is 0, 1 or 2, R⁴ is a monovalent linear or branched unsaturated hydrocarbon group having 2 to 20 carbon atoms or monovalent C₂₋₂₀ hydrocarbon group substituted with acryloyloxy or methacryloyloxy group in the terminal;
   at least one kind of linear, cyclic or branched polysiloxane having a number average molecular weight of 200 to 300, 000 which has an alkoxysilyl group shown by the formula [3]:

   ≡Si-OR⁵ [3]

   (wherein R⁵ is a monovalent hydrocarbon group substituted or unsubstituted and having 1 to 18 carbon atoms) and has at least one siloxane structural unit in the backbone which unit is shown by the formula [4]: 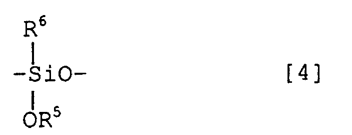 wherein R⁶ is an alkyl group having 1 to 18 carbon atoms, phenyl group or monovalent linear or branched unsaturated hydrocarbon group having 2 to 20 carbon atoms, and R⁵ is as defined above, or the formula [4']: 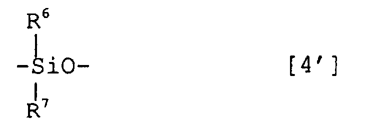 wherein R⁷ is a monovalent C₁₋₁₈ hydrocarbon group substituted with alkoxysilyl group in the terminal and R⁶ is as defined above; and
   fine-powdered silicic acid and/or a silicate having a specific surface area of 5 to 500 m²/g (BET adsorption amount: ISO 5794/1, Annex D).
(2) A rubber composition according to the (1) above, wherein the rubber composition contains 5 to 90 parts by weight of the fine-powdered silicic acid and/or silicate to 100 parts by weight of the ethylene-α-olefin having 3 to 12 carbon atoms-non-conjugated polyene copolymer rubber and wherein the alkoxysilane compound shown by the above formula [1] or [2] is used in such an amount that the alkoxysilyl group of the alkoxysilane compound is available for use by 0.1 ×10⁻⁶ mole to 13.5 ×10⁻⁶ mole per 1 m² specific surface area of the fine-powdered silicic acid and/or silicate.
(3) A rubber composition according to the (1) or (2) above, wherein the rubber composition further contains a carbon black having a specific surface area of 5 to 90 m²/g and/or an inorganic filler having a specific surface area of 1 to 30 m²/g in an amount of 0.1 to 60 parts by weight and/or 0.1 to 100 parts by weight, respectively, to 100 parts by weight of the ethylene-α-olefin having 3 to 12 carbon atoms-non-conjugated polyene copolymer rubber.
(4) A rubber composition according to any one of the (1) to (3) above, wherein the ethylene-α-olefin having 3 to 12 carbon atoms-non-conjugated polyene copolymer rubber contains (a) the unit derived from ethylene and (b) the unit derived from α-olefin having 3 to 12 carbon atoms in a molar ratio of 50/50 to 90/10 [(a)/(b)].
(5) A rubber composition according to any one of the (1) to (4) above, wherein the ethylene-α-olefin having 3 to 12 carbon atoms-non-conjugated polyene copolymer rubber shows an iodine value of 8 to 50.
(6) A rubber composition according to any one of the (1) to (5) above, wherein the ethylene-α-olefin having 3 to 12 carbon atoms-non-conjugated polyene copolymer rubber has a Mooney viscosity (MS₁₊₄, 160 °C) of 30 to 100.
(7) A rubber composition according to any one of the (1) to (6) above, wherein the rubber composition further contains other rubber or plastics.
(8) A vulcanizing method for the rubber composition according to any one of the (1) to (7) above, characterized in that the rubber composition is heated at 100 to 270 °C for 1 to 150 minutes depending on the temperature of the heating.
(9) A rubber product obtainable by the vulcanizing method set forth in the (8) above.
(10) A rubber product according to the (9) above, wherein the product is a wiper blade or rubber vibration insulator.

The rubber composition according to the present invention and the vulcanized rubber obtained therefrom will be explained concretely hereinafter.

First, explanation is made on the rubber composition of the present invention. The rubber composition of the present invention comprises an ethylene-α-olefin having 3 to 12 carbon atoms-non-conjugated polyene copolymer rubber, a specific alkoxysilane compound, a specific polysiloxane, and further a specific fine-powdered silicic acid and/or silicate.

### Ethylene-α-olefin having 3 to 12 carbon atoms-non-conjugated polyene copolymer rubber

The ethylene-α-olefin having 3 to 12 carbon atoms-non-conjugated polyene copolymer rubber used in the present invention preferably contains (a) the unit derived from ethylene and (b) the unit derived from α-olefin having 3 to 12 carbon atoms in a molar ratio of 50/50 to 90/10 [(a)/(b)] in view of obtaining a rubber composition which can provide a vulcanized rubber molding excellent in heat resistance and weather resistance. The above molar ratio [(a)/(b)] is more preferably 50/50 to 80/20.

The α-olefins in the above-mentioned ethylene-α-olefin having 3 to 12 carbon atoms-non-conjugated polyene copolymer rubber include, concretely, propylene, 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 9-methyl-1-decene, 11-methyl-1-dodecene and 12-ethyl-1-tetradecene. These α-olefins can be used alone or in a mixture of two or more. Of these α-olefins, α-olefins having 3 to 8 carbon atoms, such as propylene, 1-butene, 4-methyl-1-pentene, 1-hexene and 1-octene, are particularly preferable.

As the non-conjugated polyenes in the ethylene-α-olefin having 3 to 12 carbon atoms-non-conjugated polyene copolymer rubber there are concretely enumerated chain non-conjugated dienes such as 1,4-hexadiene, 1,6-octadiene, 2-methyl-1,5 hexadiene, 6-methyl-1,5-heptadiene and 7-methyl-1,6 octadiene; cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene and 6-chloromethyl-5-isopropenyl-2-norbornene; and trienes such as 2,3-diisopropylidene-5-norbornene, 2-ethylidene-3-isopropylidene-5-norbornene, 2-propenyl-2,5-norbonadiene, 1,3,7-octatriene, 1,4,9-decatriene, 4,8-dimethyl-1,4,8-decatriene and 4-ethylidene-8-methyl-1,7-nonadiene. Among these, 1,4-hexadiene and cyclic non-conjugated diene, particularly 5-ethylidene-2-norbornene are preferably employed. In the present invention, when 5-ethylidene-2-norbornene is used as the non-conjugated polyene, a rubber composition or a vulcanized rubber most excellent in fatigue resistance is obtained.

The ethylene-α-olefin having 3 to 12 carbon atoms-non-conjugated polyene copolymer rubber used in the present invention has an iodine value, an index of non-conjugated polyene content, of usually 8 to 50, preferably 8 to 30.

The ethylene-α-olefin having 3 to 12 carbon atoms-non-conjugated polyene copolymer rubber used in the present invention has a Mooney viscosity MS₁₊₄(160 °C) of usually 30 to 100, preferably 50 to 80. In the present invention, when an ethylene-α-olefin having 3 to 12 carbon atoms-non-conjugated polyene copolymer rubber is used which has a Mooney viscosity MS₁₊₄(160 °C) in the above range, a rubber composition or a vulcanized rubber is obtained which gives fatigue resistance equivalent or superior to that of the diene type rubber such as natural rubber.

In the present invention, though the above-mentioned ethylene-α-olefin having 3 to 12 carbon atoms-non-conjugated polyene copolymer rubber can be used alone as the rubber component, other rubber or plastics can further be formulated. For example, a blend of the above copolymer rubber and a diene type rubber can be used.

The diene type rubber is exemplified by natural rubber (NR), isoprene rubber (IR), butadiene rubber (BR), styrene-butadiene rubber (SBR), acrylonitrile-butadiene rubber (NBR) and chloroprene rubber (CR). Of these, natural rubber and isoprene rubber are preferable. The above diene type rubber can be used alone or in a combination. The plastics include, concretely, polyolefin resins such as crystalline polypropylene and 4-methylpentene-1, nylons, polyesters and polycarbonates.

In the present invention, the diene type rubber is used usually in a proportion of 20 to 50 parts by weight to the total 100 parts by weight of the ethylene-α-olefin having 3 to 12 carbon atoms-non-conjugated polyene copolymer rubber.

### Alkoxysilane compound

The alkoxysilane compound used in the present invention is indicated by the following formula [1]: 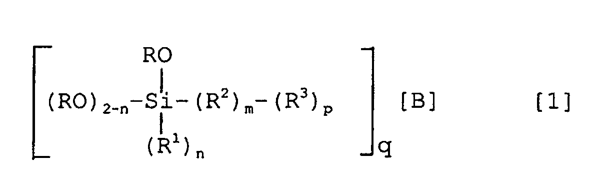 [wherein R is an alkyl group having 1 to 4 carbon atoms, R¹ is an alkyl group having 1 to 4 carbon atoms or phenyl group, n is 0, 1 or 2, R² is a divalent linear or branched hydrocarbon group having 1 to 6 carbon atoms, R³ is an arylene group having 6 to 12 carbon atoms, m and p are each 0 or 1 provided that m and p are not 0 at the same time, q is 1 or 2, B is -SCN or -SH if q is 1 and -Sx- if q is 2 (wherein x is an integer of 2 to 8)], or the formula [2]: 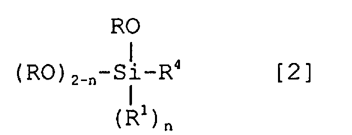 [wherein R is an alkyl group having 1 to 4 carbon atoms, R¹ is an alkyl group having 1 to 4 carbon atoms or phenyl group, n is 0, 1 or 2, R⁴ is a monovalent linear or branched unsaturated hydrocarbon group having 2 to 20 carbon atoms or monovalent C₂₋₂₀ hydrocarbon group substituted with acryloyloxy or methacryloyloxy group in the terminal], and also plays a role as silane coupling agent.

In the above formulas [1] and [2], the alkyl group having 1 to 4 carbon atoms, shown by R or R¹, includes, for example, methyl, ethyl, n-propyl, isopropyl, n-butyl, isobutyl, sec-butyl and tert-butyl group.

In the above formula [1], the divalent linear or branched hydrocarbon group having 1 to 6 carbon atoms, shown by R², includes, for example, alkylene group such as methylene, dimethylmethylene, ethylene, dimethylethylene, trimethylene, tetramethylene, 1,2-cyclohexylene and 1,4-cyclohexylene group; alkylidene group such as cyclohexylidene group;and arylalkylene group such as diphenylmethylene and diphenylethylene group. The arylene group having 6 to 12 carbon atoms, shown by R³, includes phenylene, naphthylene and biphenylylene group.

In the above formula [2], the monovalent linear or branched unsaturated hydrocarbon group having 2 to 20 carbon atoms, shown by R⁴, includes vinyl, allyl and 3-butenyl group. The monovalent C₂₋₂₀ hydrocarbon group substituted with acryloyloxy or methacryloyloxy group in the terminal includes, for example, acryloyloxyethyl, methacryloyloxyethyl, acryloyloxypropyl and methacryloyloxypropyl group.

Of the alkoxysilane compound indicated by the above formula [1], the following trialkoxysilane compound, which results from the B being -S₄- in the above formula, is used favorably.
(1) Bis-[3-(trimethoxysilyl)propyl] tetrasulfide
   (CH₃O)₃Si-(CH₂)₃-S₄-(CH₂)₃-Si(OCH₃)₃
(2) Bis-[3-(triethoxysilyl)propyl] tetrasulfide
   (C₂H₅O)₃Si-(CH₂)₃-S₄-(CH₂)₃-Si(OC₂H₅)₃
(3) Bis-[3-(tripropoxysilyl)propyl] tetrasulfide
   (C₃H₇O)₃Si-(CH₂)₃-S₄-(CH₂)₃-Si(OC₃H₇)₃
   Of the above-mentioned compounds, the compound of the above (2), bis-[3-(triethoxysilyl)propyl] tetrasulfide is particularly preferable.
   Of the alkoxysilane compound indicated by the above formula [2], preferred is a compound as mentioned in the following.
(4) 3-Butenyltriethoxysilane
   (C₂H₅O)₃Si-CH₂CH₂CH=CH₂

By using the alkoxysilane compound indicated by the above formula [1] or [2], a vulcanized rubber having excellent dynamic characteristics can be obtained.

In the present invention, the alkoxysilane compound is used in such an amount that the alkoxysilyl group of the alkoxysilane compound may be utilizable usually by 0.1×10⁻⁶ to 13.5×10⁻⁶ mole, preferably 0.3×10⁻⁶ to 10.5×10⁻⁶ mole per 1 m² specific surface area of the fine-powdered silicic acid and/or silicate.

It is possible to obtain a rubber composition excellent in heat resistance, fatigue resistance and dynamic characteristics by using the alkoxysilane compound in the ratio as mentioned above.

### Polysiloxane

The polysiloxane used in the present invention is a linear, cyclic or branched polysiloxane which has an alkoxysilyl group shown by the formula [3]:

≡Si-OR⁵ [3]

(wherein R⁵ is a monovalent hydrocarbon group substituted or unsubstituted and having 1 to 18 carbon atoms) and has at least one siloxane structural unit in the backbone which unit is shown by the formula [4]: 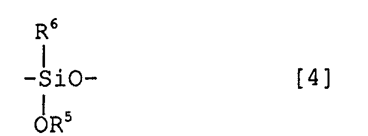 wherein R⁶ is an alkyl group having 1 to 18 carbon atoms, phenyl group or monovalent linear or branched unsaturated hydrocarbon group having 2 to 20 carbon atoms, and R⁵ is as defined above, or the formula [4']: 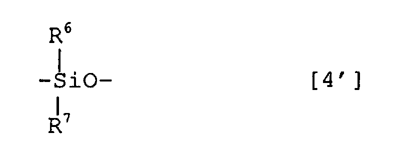 wherein R⁷ is a monovalent C₁₋₁₈ hydrocarbon group substituted with alkoxysilyl group in the terminal and R⁶ is as defined above.

In the above formula [3] or [4], as the monovalent hydrocarbon group substituted or unsubstituted and having 1 to 18 carbon atoms, shown by R⁵, there are enumerated, for example, alkyl groups such as methyl, ethyl, n-propyl, isopropyl, n-butyl, isobutyl, sec-butyl and tert-butyl; and ether group-containing hydrocarbon groups such as methoxyethyl group.

In the above formula [4], as the alkyl group having 1 to 18 carbon atoms, shown by R⁶, there are enumerated, for example, methyl, ethyl, n-propyl, isopropyl, n-butyl, isobutyl, sec-butyl and tert-butyl.

In the above formula [4], as the monovalent linear or branched unsaturated hydrocarbon group having 2 to 20 carbon atoms, shown by R⁶, there are enumerated, for example, vinyl, allyl and 3-butenyl group.

In the above formula [4'], the alkoxysilyl group in the monovalent hydrocarbon group having 1 to 18 carbon atoms and substituted with the alkoxysilyl group in the terminal, shown by R⁷, may be any one of monoalkoxysilyl, dialkoxysilyl and trialkoxysilyl group. As the alkoxy group of the alkoxysilyl group concerned, preference is given to alkoxy group having 1 to 4 carbon atoms, such as methoxy, ethoxy, propoxy, isopropoxy, n-butoxy, isobutoxy, sec-butoxy and tert-butoxy group. The alkoxysilyl group in the monovalent hydrocarbon group having 1 to 18 carbon atoms and substituted with alkoxysilyl group in the terminal includes, for example, trimethoxysilyl, triethoxysilyl and tripropoxysilyl groups. Further, the monovalent hydrocarbon group having 1 to 18 carbon atoms in the above-mentioned monovalent hydrocarbon group having 1 to 18 carbon atoms and substituted with alkoxysilyl group in the terminal includes ones as mentioned above for R⁵.

As the above polysiloxane, the polysiloxanes of the following formulas (1) to (7) can be shown as examples. Among the following examples, the polysiloxanes having the structures of the formulas (4) to (7) are preferable.

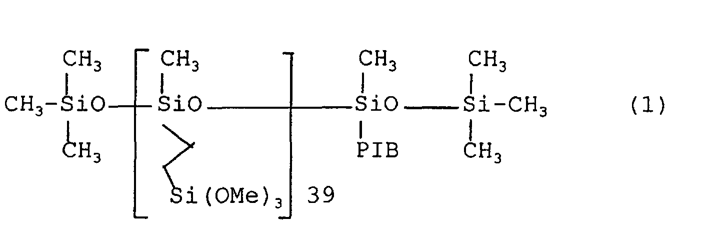

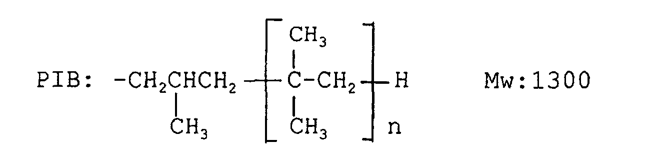

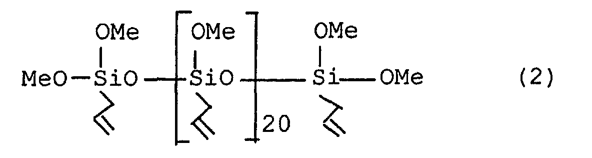

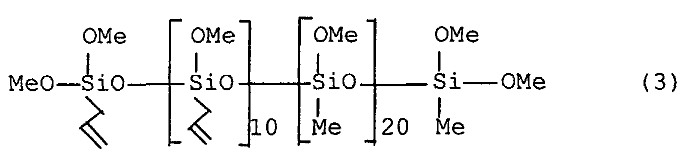

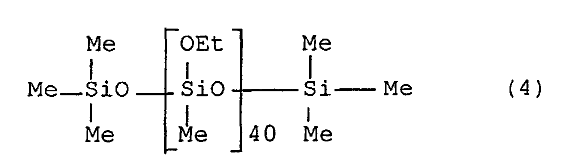

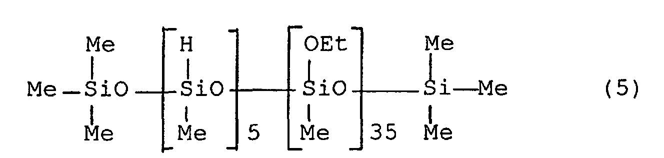

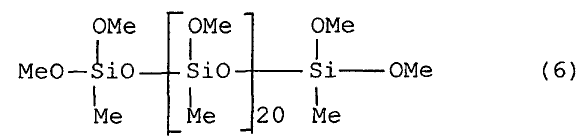

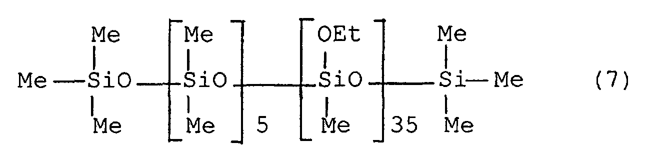

The number average molecular weight of the above polysiloxane is 200 to 300,000, preferably 1,000 to 100,000. The polysiloxane is used usually in an amount of 1×10⁻⁴ to 100 moles, preferably 1×10⁻³ to 50 moles per 1 mole of the above alkoxysilane compound. The number average molecular weight of the polysiloxane can be determined by GPC method.

By jointly using the polysiloxane and the alkoxysilane compound, there can be obtained a rubber composition excellent in dynamic characteristics and in mechanical properties, particularly tensile elongation at break, compared with a rubber composition wherein the alkoxysilane compound is used singly. The rubber composition wherein the alkoxysilane compound is used singly shows good dynamic characteristics, but shows poor tensile elongation at break. The rubber composition wherein the polysiloxane is used singly gives good tensile elongation at break, but gives poor dynamic characteristics.

### Fine-powdered silicic acid and/or silicate

The fine-powdered silicic acid and/or silicate used in the present invention has a specific surface area of 5 to 500 m²/g (BET adsorption amount: ISO 5794/1, Annex D), preferably 10 to 250 m²/g, more preferably 10 to 150 m²/g. Examples of the silicate include magnesium silicate. In the present invention, the fine-powdered silicic acid and/or silicate can be used alone or in a combination thereof.

In the present invention, the fine-powdered silicic acid and/or silicate is used as the total in a ratio of usually 5 to 90 parts by weight, preferably 20 to 80 parts by weight to 100 parts by weight of the ethylene-α-olefin having 3 to 12 carbon atoms-non-conjugated polyene copolymer rubber.

Further, when the rubber composition of the present invention is used for a rubber vibration insulator product, the formulation ratios of the alkoxysilane compound, polysiloxane, and fine-powdered silicic acid and/or silicate are adjusted in compliance with the use and object, since there are required the dynamic characteristics which exert a damping effect against vibration in accordance with the use of the rubber vibration insulator product.

### Other components

In the present invention, it is possible to formulate additives in the rubber composition, such as inorganic filler, other than the fine-powdered silicic acid and silicate in an extent not to damage the object of the invention.

The above inorganic filler other than the fine-powdered silicic acid and silicate includes, concretely, carbon blacks such as SRF, GPF, FEF, MAF, HAF, ISAF, SAF, FT and MT, usual fine-powdered silicic acid, light calcium carbonate, heavy calcium carbonate, talc and clay. The specific surface area of such carbon blacks is preferably 5 to 90 m²/g, and the specific surface area of the inorganic fillers is preferably 1 to 30 m²/g.

In the rubber composition of the present invention, the amount used of the carbon black is preferably 0.1 to 60 parts by weight to 100 parts by weight of the ethylene- α -olefin having 3 to 12 carbon atoms-non-conjugated polyene copolymer rubber. In view of obtaining a rubber composition or vulcanized rubber excellent in dynamic characteristics and fatigue resistance, the amount used of the inorganic filler other than the fine-powdered silicic acid and silicate is preferably 0 to 100 parts by weight to 100 parts by weight of the ethylene-α-olefin having 3 to 12 carbon atoms-non-conjugated polyene copolymer rubber. The total amount of the all inorganic filler components is usually 0.1 to 120 parts by weight, preferably 10 to 120 parts by weight, and more preferably 10 to 100 parts by weight against 100 parts by weight of the ethylene-α-olefin having 3 to 12 carbon atoms-non-conjugated polyene copolymer rubber.

### Manufacturing method of vulcanized rubber

In order to obtain a vulcanized rubber from the rubber composition of the present invention, as with the vulcanization of usual rubbers, an un-vulcanized compounded rubber (rubber composition) is once prepared by the method mentioned hereinafter and formed into an intended shape, and then vulcanization is conducted.

In manufacturing the vulcanized rubber of the present invention, according to the intended use of the vulcanized rubber and performance based thereon, proper selections are made regarding the kind and formulation amount of the rubber component, alkoxysilane compound, polysiloxane, and fine-powdered silicic acid and/or silicate, and a softening agent as well, further regarding the kind and formulation amount of the compounds constituting the vulcanization system, such as vulcanizing agent, vulcanization accelerator and vulcanization aid, and furthermore regarding the process for manufacturing the vulcanized rubber.

The above-mentioned softening agents may be any of those conventionally used for rubbers. Illustrative examples thereof may include petroleum softening agents, such as process oil, lubricating oil, liquid paraffin, petroleum asphalt and vaseline; coal tar softening agents, such as coal tar and coal tar pitch; fatty oil softening agents, such as castor oil, linseed oil, rape oil, soybean oil and coconut oil; tall oil; rubber substitute (factice); waxes, such as beeswax, carnauba wax and lanolin; fatty acids and fatty acid salts, such as ricinolic acid, palmitic acid, stearic acid, barium stearate, calcium stearate and zinc laurate; synthetic polymeric substances, such as petroleum resin, atactic polypropylene and coumarone-indene resin. These are used alone or in a combination of two or more. Among these, the petroleum softening agents, with particular preference being given to process oil, are preferably used. These softening agents can be used in a ratio of 0 to 100 parts by weight, preferably 2 to 80 parts by weight to 100 parts by weight of the ethylene-α-olefin having 3 to 12 carbon atoms-non-conjugated polyene copolymer rubber.

The vulcanizing agent includes sulfur and sulfur compounds. Examples of the sulfur include powdered sulfur, precipitated sulfur, colloid sulfur, surface treated sulfur and insoluble sulfur. Examples of the sulfur compounds include sulfur chloride, sulfur dichloride, polymeric polysulfides and sulfur compounds which release active sulfur at vulcanization temperatures to effect vulcanization, such as morpholine disulfide, alkylphenol disulfide, tetramethylthiuram disulfide, dipentamethylenethiuram tetrasulfide and selenium dimethyldithiocarbamate. Among these, sulfur is preferred. The sulfur or sulfur compound is used usually in a ratio of 0.1 to 4 parts by weight, preferably 0.5 to 3 parts by weight to 100 parts by weight of the ethylene-α-olefin having 3 to 12 carbon atoms-non-conjugated polyene copolymer rubber.

Further, when sulfur or a sulfur compound is used as the vulcanizing agent, it is preferable to jointly use a vulcanization accelerator. The vulcanization accelerator includes, concretely, thiazole compounds such as N-cyclohexyl-2-benzothiazolesulfenamide (CBS), N-oxydiethylene-2-benzothiazolesulfenamide (OBS), N-t-butyl-2-benzothiazolesulfenamide (BBS), N,N-diisopropyl-2-benzothiazolesulfenamide, 2-mercaptobenzothiazole (MBT), 2-(2,4-dinitrophenyl)mercaptobenzothiazole, 2-(4-morpholinodithio)benzothiazole, 2-(2,6-diethyl-4-morpholinothio)benzothiazole and dibenzothiazyl disulfide; guanidine compounds such as diphenylguanidine (DPG), triphenylguanidine, di-o-tolylguanidine (DOTG), o-tolylbiguanide and diphenylguanidine phthalate; aldehydeamine or aldehyde-ammonia compounds such as acetaldehydeaniline condensation product, butylaldehyde-aniline condensation product, hexamethylenetetramine (H), acetaldehyde-ammonia reaction product; imidazoline compounds such as 2-mercaptoimidazoline; thiourea compounds such as thiocarbanilide, diethylthiourea (EUR), dibutylthiourea, trimethylthiourea and di-o-tolylthiourea; thiuram compounds such as tetramethylthiuram monosulfide (TMTM), tetramethylthiuram disulfide (TMTD), tetraethylthiuram disulfide, tetrabutylthiuram disulfide, tetrakis(2-ethylhexyl)thiuram disulfide (TOT) and dipentamethylenethiuram tetrasulfide (TRA); dithiocarbamates such as zinc dimethyldithiocarbamate, zinc diethyldithiocarbamate, zinc di-n-butyldithiocarbamate (ZnBDC), zinc ethylphenyldithiocarbamate, zinc butylphenyldithiocarbamate, sodium dimethyldithiocarbamate, selenium dimethyldithiocarbamate, tellurium dimethyldithiocarbamate and tellurium diethyldithiocarbamate; xanthates such as zinc dibutylxanthate; and compounds such as zinc white (zinc oxide) . These vulcanization accelerators are used in a ratio of usually 1 to 20 parts by weight, preferably 0.5 to 10 parts by weight to 100 parts by weight of the ethylene-α-olefin having 3 to 12 carbon atoms-non-conjugated polyene copolymer rubber.

In the present invention, it is also possible to incorporate the alkoxysilane compound, polysiloxane and fine-powdered silicic acid and/or silicate into the rubber component after treating them beforehand, as described, for example, in the specification of US Patent No. 4,076,550 or German Patent No. P4004781.

The whole amount of the fine-powdered silicic acid and/or silicate does not need to be modified by the alkoxysilane compound and/or polysiloxane, and it may be used with a part of thereof being modified and the remainder being unmodified.

The un-vulcanized compounded rubber is prepared, for example, by the following method. That is, the above-mentioned rubber component, alkoxysilane compound, polysiloxane, fine-powdered silicic acid and/or silicate, and further softening agent are kneaded with a mixer such as Bumbury's mixer at a temperature of 80 to 190 °C for 3 to 20 minutes. Then, subsequent to additional blending of the vulcanizing agent and optionally incorporated vulcanization accelerator or vulcanization aid with a roll such as open-roll, the mixture is kneaded at a roll temperature of 40 to 60°C for 5 to 30 minutes, and thereafter the kneaded mass is extruded to prepare a ribbon-or sheet-shaped compounded rubber.

The compounded rubber thus prepared may be formed into an intended shape with an extruder, calendar roll or press, and heated usually at a temperature of 100 to 270 °C for usually 1 to 150 minutes simultaneously with the molding or after introducing the molded article into a vulcanizing chamber to produce a vulcanized rubber. Upon effecting such vulcanization, a mold may or may not be used. When the mold is not used, the process of the molding and vulcanization is carried out usually continuously.

The vulcanized rubber obtained from the rubber composition of the present invention finds wide uses for tires, automobile parts, industrial parts, articles for earthwork and construction, and the like. Particularly, it can be employed suitably for the uses wherein the resistance to dynamic fatigue is demanded, uses such as tire tread, tire side wall, wiper blade and rubber vibration insulator for engine mount of automobile.

This specification includes part or all of contents as disclosed in the specification of Japanese Patent Application No. 2000-210218, which is the base of the priority claim of the present application.

### Best Mode for Carrying Out the Invention

The present invention will hereinafter be explained by way of examples, which should not be considered as limiting the present invention. The testing methods for various physical properties in Examples and Comparative examples are as described in the following.

### [Iodine value]

The iodine value of the copolymer rubber was determined by titration method.

### [Mooney viscosity]

The Mooney viscosity was measured at a measuring temperature of 160 °C with a S-type rotor, according to JIS K6300.

### [Tensile test/Hardness test]

The tensile test was conducted under conditions of a measuring temperature of 23°C and a tensile speed of 500 mm/min. according to JIS K6251. 25% modulus (M₂₅), 50% modulus (M₅₀), 100% modulus (M₁₀₀), 200% modulus (M₂₀₀), 300% modulus (M₃₀₀), tensile strength at break T_{B}, elongation E_{B} and hardness H_{A} were measured.

### [Compression set test]

The compression set test was conducted according to JIS K6262 (1993).

### [Evaluation of dynamic characteristics (tan δ)]

The test of dynamic characteristics (dynamic viscoelasticity test) was based on JIS K6394, and tan δ was determined at frequencies of 10 H_{z} and 1 H_{z} under conditions of a measuring temperature of 25 °C and a strain ratio of 1% using a viscoelasticity testing equipment (model: RDS-II) made by Rheometrics Inc.

The ethylene-propylene-5-ethylidene-2-norbornene copolymer rubber, alkoxysilane compound, polysiloxane and fine-powdered silicic acid used in Examples and Comparative examples were as follows.
(1) Ethylene-propylene-5-ethylidene-2-norbornene copolymer rubber (EPDM-1)

**Table 1**

| | EPDM-1 |
|---|---|
| Ethylene content (mole%) | 70 |
| Iodine value (ENB) | 18 |
| MS₁₊₄ (160 °C) | 70 |

(2) Alkoxysilane compound (silane coupling agent) Bis-[3-(triethoxysilyl)propyl] tetrasulfide [made by Degussa Huels AG., trade name Si-69]
(3) Polysiloxane
Polysiloxane-1 (number average molecular weight 4090)
Manufacturing method of Polysiloxane-1: To a mixture of 180 g of ethanol and 200 µl of 1% isopropyl alcohol solution of chloroplatinic acid, 200 g of polymethylhydrogen siloxane (made by Shin-Etsu Chem. Co., Ltd., trade name KF99) was added dropwise over 3 hours, and further the mixture was reacted at 80 °C for 10 hours to synthesize the substance. Then, excess ethanol was evaporated under reduced pressure. 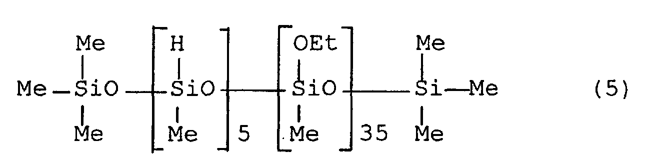 Polysiloxane-2 (number average molecular weight 2030, viscosity 25 cSt (20 °C) ) 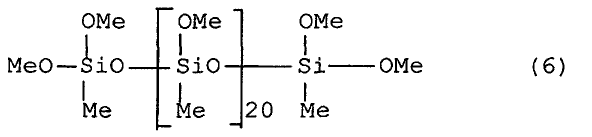
(4) Fine-powdered silicic acid

**Table 2**

| | DUROSIL*¹ |
|---|---|
| Specific surface area (m²/g) (BET) | 50 |
| pH | 9 |
| DBP oil absorption (g/100 g) | 220 |
| Average size of agglomerate (µm) | 4.5 |

| | |
|---|---|
| *¹: made by Degussa Huels AG. | |

### (Example 1)

Hundred parts by weight of EPDM-1 shown in Table 1, 50 parts by weight of a paraffinic process oil [made by Sanshin Chem. Ind. Co., Ltd., trade name Sansen 4240], 5 parts by weight of zinc white No.1, 1 part by weight of stearic acid, 5 parts by weight of MAF carbon black [made by Tokai Carbon Co., Ltd., trade name Seast G116], 45 parts by weight of fine-powdered silicic acid, 1.2 parts by weight of the alkoxysilane compound and 4 parts by weight of Polysiloxane-1 were kneaded using a 2.95-liter- volume Mixtron mixer [made by Kobe Steel, Ltd.]. The amount of the alkoxysilyl group of the alkoxysilane compound was 5.9×10⁻⁶ mole per 1 m² specific surface area of the fine-powdered silicic acid. The amount used of the polysiloxane was 0.44 mole to 1 mole of the alkoxysilane compound.

The kneaded mass thus obtained was cooled to about 50 °C and added with 1.5 parts by weight of sulfur, 1.0 part by weight of Nocceler M [MBT made by Oouchi Shinko Kagaku Kogyo K.K., vulcanization accelerator], 0.8 part by weight of Nocceler TRA [made by Oouchi Shinko Kagaku Kogyo K.K., vulcanization accelerator], 1.5 parts by weight of Nocceler BZ [ZnBDC made by Oouchi Shinko Kagaku Kogyo K.K., vulcanization accelerator] and 0.8 part by weight of Nocceler TT [TMTD made by Oouchi Shinko Kagaku Kogyo K.K., vulcanization accelerator]. The mixture was kneaded with a 8-inch roll (temperature of fore roll and back roll:50 °C) and partly taken out in the form of a sheet, which was pressed at 160 °C for 15 minutes to obtain a 2-mm thick vulcanized sheet. On this vulcanized sheet, evaluation of the physical properties was performed according to the methods previously mentioned. Further, under the press conditions of 160 °C and 20 minutes, there was obtained a thick molding of the vulcanized rubber to be placed for the compression set test, and the compression set test was conducted using this thick vulcanized rubber molding. The results are shown in Table 3.

### (Comparative example 1)

A vulcanized rubber molding was obtained through the same formulation and molding conditions as in Example 1 except for not using the alkoxysilane compound and polysiloxane, and evaluation of the physical properties was conducted. The results are shown in Table 3.

### (Comparative example 2)

A vulcanized rubber molding was obtained through the same formulation and molding conditions as in Example 1 except for not using the polysiloxane, and evaluation of the physical properties was conducted. The results are shown in Table 3.

### (Comparative example 3)

A vulcanized rubber molding was obtained through the same formulation and molding conditions as in Example 1 except for not using the alkoxysilane compound, and evaluation of the physical properties was conducted. The results are shown in Table 3.

### (Example 2)

A vulcanized rubber molding was obtained using the same formulation and molding conditions as in Example 1 except for using Polysiloxane-2 in place of Polysiloxane-1, and evaluation of the physical properties was conducted. The results are shown in Table 3. The amount used of the above polysiloxane was 0.89 mole to 1 mole of the above alkoxysilane compound.

### (Example 3)

A vulcanized rubber molding was obtained using the same formulation and molding conditions as in Example 1 except for changing the formulation amount of Polysiloxane-1 to 6 parts by weight, and evaluation of the physical properties was conducted. The results are shown in Table 3. The amount used of the above polysiloxane was 0.66 mole to 1 mole of the above alkoxysilane compound.

### (Example 4)

A vulcanized rubber molding was obtained using the same formulation and molding conditions as in Example 1 except for changing the formulation amount of the alkoxysilane compound to 2.25 parts by weight, and evaluation of the physical properties was conducted. The results are shown in Table 3. The amount of the alkoxysilyl group of the above alkoxysilane compound was 1.1×10⁻⁵ mole per 1 m² specific surface area of the above fine-powdered silicic acid. The amount used of the above polysiloxane was 0.23 mole to 1 mole of the above alkoxysilane compound.

### (Comparative example 4)

A vulcanized rubber molding was obtained using the same formulation and molding conditions as in Example 4 except for not using Polysiloxane-1, and evaluation of the physical properties was conducted. The results are shown in Table 3.

### (Example 5)

A vulcanized rubber molding was obtained using the same formulation and molding conditions as in Example 1 except for changing the formulation amount of the fine-powdered silicic acid (DUROSIL) to 40 parts by weight and the formulation amount of the alkoxysilane compound to 1 part by weight, and evaluation of the physical properties was conducted. The results are shown in Table 3. The amount of the alkoxysilyl group of the above alkoxysilane compound was 6.2×10⁻⁶ mole per 1 m² specific surface area of the above fine-powdered silicic acid. The amount used of the above polysiloxane was 0.53 mole to 1 mole of the above alkoxysilane compound.

**Table 3**

| | Ex.1 | Com. ex.1 | Com. ex.2 | Com. ex.3 | Ex.2 | Ex.3 | Ex.4 | Com. ex.4 | Ex.5 |
|---|---|---|---|---|---|---|---|---|---|
| EPDM-1 | 100 | 100 | 100 | 100 | 100 | 100 | 100 | 100 | 100 |
| Paraffinic oil | 50 | 50 | 50 | 50 | 50 | 50 | 50 | 50 | 50 |
| Stearic acid | 1 | 1 | 1 | 1 | 1 | 1 | 1 | 1 | 1 |
| Zinc white No.1 | 5 | 5 | 5 | 5 | 5 | 5 | 5 | 5 | 5 |
| MAF carbon black | 5 | 5 | 5 | 5 | 5 | 5 | 5 | 5 | 5 |
| DUROSIL | 45 | 45 | 45 | 45 | 45 | 45 | 45 | 45 | 40 |
| Alkoxysilane compound | 1.2 | | 1.2 | | 1.2 | 1.2 | 2.25 | 2.25 | 1 |
| Polysiloxane-1 | 4 | | | 4 | | 6 | 4 | | 4 |
| Polysiloxane-2 | | | | | 4 | | | | |
| Vulcanization accelerator | | | | | | | | | |
| Nocceler M | 1 | 1 | 1 | 1 | 1 | 1 | 1 | 1 | 1 |
| Nocceler TRA | 0.8 | 0.8 | 0.8 | 0.8 | 0.8 | 0.8 | 0.8 | 0.8 | 0.8 |
| Nocceler BZ | 1.5 | 1.5 | 1.5 | 1.5 | 1.5 | 1.5 | 1.5 | 1.5 | 1.5 |
| Nocceler TT | 0.8 | 0.8 | 0.8 | 0.8 | 0.8 | 0.8 | 0.8 | 0.8 | 0.8 |
| Sulfur | 1.5 | 1.5 | 1.5 | 1.5 | 1.5 | 1.5 | 1.5 | 1.5 | 1.5 |
| Physical properties of vulcanized rubber | | | | | | | | | |
| M₂₅(MPa) | 0.50 | 0.52 | 0.49 | 0.47 | 0.52 | 0.50 | 0.58 | 0.59 | 0.50 |
| M₅₀(MPa) | 0.79 | 0.90 | 0.88 | 0.90 | 0.82 | 0.78 | 0.97 | 0.99 | 0.89 |
| M₁₀₀(MPa) | 1.4 | 1.8 | 1.7 | 1.8 | 1.5 | 1.3 | 1.9 | 1.8 | 1.6 |
| M₂₀₀(MPa) | 3.4 | 4.0 | 4.1 | 3.7 | 3.6 | 3.3 | 5.1 | 4.7 | 4.3 |
| M₃₀₀(MPa) | 6.0 | 7.6 | 7.4 | 7.5 | 6.2 | 5.7 | 9.1 | 8.8 | 8.2 |
| T_{B}(MPa) | 10 | 14 | 12 | 13 | 11 | 11 | 12 | 11 | 11 |
| E_{B}(%) | 462 | 480 | 406 | 450 | 458 | 520 | 420 | 377 | 450 |
| H_{A}(Shore A) | 51 | 51 | 52 | 50 | 52 | 51 | 52 | 52 | 53 |
| Compression set(%) | 38 | 34 | 35 | 32 | 37 | 38 | 32 | 35 | 35 |
| Dynamic characteristics | | | | | | | | | |
| 1Hz tan δ | 3.24 | 5.99 | 4.49 | 5.45 | 3.36 | 3.42 | 3.55 | 3.49 | 3.24 |
| 10Hz tan δ | 4.96 | 7.55 | 6.30 | 7.13 | 5.02 | 5.23 | 4.86 | 5.45 | 4.55 |
| | | | | | | | | | |
| Ex.=Example, Com.ex.=Comparative example | | | | | | | | | |

All the publications, patents and patent applications cited herein are incorporated herein by reference in their entirety.

### Industrial Applicability

The rubber composition of the present invention affords the effect that it is excellent in dynamic characteristics, as well as mechanical characteristics, dynamic fatigue resistance and heat aging resistance, and further can provide a vulcanized rubber product having the above-mentioned effect.

## Claims

1. A rubber composition, comprising an ethylene-α-olefin having 3 to 12 carbon atoms-non-conjugated polyene copolymer rubber;
at least one kind of alkoxysilane compound shown by the formula [1]: 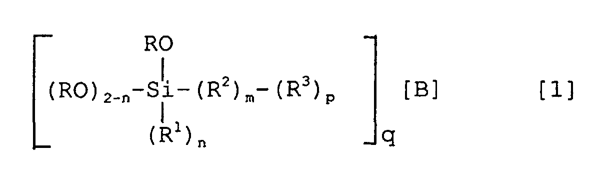 wherein R is an alkyl group having 1 to 4 carbon atoms, R¹ is an alkyl group having 1 to 4 carbon atoms or phenyl group, n is 0, 1 or 2, R² is a divalent linear or branched hydrocarbon group having 1 to 6 carbon atoms, R³ is an arylene group having 6 to 12 carbon atoms, m and p are each 0 or 1 provided that m and p are not 0 at the same time, q is 1 or 2, B is -SCN or -SH if q is 1 and -Sx- if q is 2 (wherein x is an integer of 2 to 8), or the formula [2]: 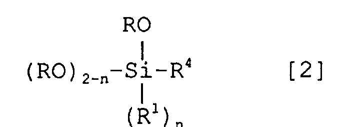 wherein R is an alkyl group having 1 to 4 carbon atoms, R¹ is an alkyl group having 1 to 4 carbon atoms or phenyl group, n is 0, 1 or 2, R⁴ is a monovalent linear or branched unsaturated hydrocarbon group having 2 to 20 carbon atoms or monovalent C₂₋₂₀ hydrocarbon group substituted with acryloyloxy or methacryloyloxy group in the terminal;
at least one kind of linear, cyclic or branched polysiloxane having a number average molecular weight of 200 to 300, 000 which has an alkoxysilyl group shown by the formula [3]:
≡Si-OR⁵ [3]
(wherein R⁵ is a monovalent hydrocarbon group substituted or unsubstituted and having 1 to 18 carbon atoms) and has at least one siloxane structural unit in the backbone which unit is shown by the formula [4]: 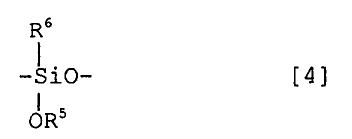 wherein R⁶ is an alkyl group having 1 to 18 carbon atoms, phenyl group or monovalent linear or branched unsaturated hydrocarbon group having 2 to 20 carbon atoms, and R⁵ is as defined above, or the formula [4']: 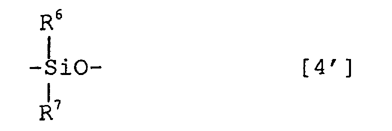 wherein R⁷ is a monovalent C₁₋₁₈ hydrocarbon group substituted with alkoxysilyl group in the terminal and R⁶ is as defined above; and
fine-powdered silicic acid and/or a silicate having a specific surface area of 5 to 500 m²/g (BET adsorption amount: ISO 5794/1, Annex D).

2. A rubber composition according to Claim 1, wherein the rubber composition contains 5 to 90 parts by weight of the fine-powdered silicic acid and/or silicate to 100 parts by weight of the ethylene-α-olefin having 3 to 12 carbon atoms-non-conjugated polyene copolymer rubber and wherein the alkoxysilane compound shown by the above formula [1] or [2] is used in such an amount that the alkoxysilyl group of the alkoxysilane compound is available for use by 0.1 ×10⁻⁶ mole to 13.5 ×10⁻⁶ mole per 1 m² specific surface area of the fine-powdered silicic acid and/or silicate.

3. A rubber composition according to Claim 1, wherein the rubber composition further contains a carbon black having a specific surface area of 5 to 90 m²/g and/or an inorganic filler having a specific surface area of 1 to 30 m²/g in an amount of 0.1 to 60 parts by weight and/or 0.1 to 100 parts by weight, respectively, to 100 parts by weight of the ethylene-α-olefin having 3 to 12 carbon atoms-non-conjugated polyene copolymer rubber.

4. A rubber composition according to Claim 1, wherein the ethylene-α-olefin having 3 to 12 carbon atoms-non-conjugated polyene copolymer rubber contains (a) the unit derived from ethylene and (b) the unit derived from α-olefin having 3 to 12 carbon atoms in a molar ratio of 50/50 to 90/10 [(a)/(b)].

5. A rubber composition according to Claim 1, wherein the ethylene-α-olefin having 3 to 12 carbon atoms-non-conjugated polyene copolymer rubber shows an iodine value of 8 to 50.

6. A rubber composition according to Claim 1, wherein the ethylene-α-olefin having 3 to 12 carbon atoms-non-conjugated polyene copolymer rubber has a Mooney viscosity (MS₁₊₄, 160 °C) of 30 to 100.

7. A rubber composition according to Claim 1, wherein the rubber composition further contains other rubber or plastics.

8. A vulcanizing method for the rubber composition according to Claim 1, **characterized in that** the rubber composition is heated at 100 to 270 °C for 1 to 150 minutes depending on the temperature of the heating.

9. A rubber product obtainable by the vulcanizing method set forth in Claim 8.

10. A rubber product according to Claim 9, wherein the product is a wiper blade or rubber vibration insulator.
